(19) **Europäisches Patentamt**
**European Patent Office**
**Office européen des brevets**

(11) Numéro de publication : **0 164 372 B1**

(12) **FASCICULE DE BREVET EUROPÉEN**

(45) Date de publication du fascicule du brevet :
**30.09.87**

(51) Int. Cl.⁴ : **A 23 L 1/317, A 23 L 1/315**

(21) Numéro de dépôt : **85900035.8**

(22) Date de dépôt : **07.12.84**

(86) Numéro de dépôt international :
**PCT/CH 84/00191**

(87) Numéro de publication internationale :
**WO/8502520 (20.06.85 Gazette 85/14)**

(54) PROCEDE POUR LA REALISATION D'UN PRODUIT COMESTIBLE A PARTIR DE BAS MORCEAUX DE VIANDE.

(30) Priorité : **12.12.83 CH 6621/83**

(43) Date de publication de la demande :
**18.12.85 Bulletin 85/51**

(45) Mention de la délivrance du brevet :
**30.09.87 Bulletin 87/40**

(84) Etats contractants désignés :
**AT BE DE FR GB NL SE**

(56) Documents cités :
**AU-A- 523 911**
**FR-A- 1 296 367**
**FR-A- 1 511 395**
**FR-A- 2 132 785**
**FR-A- 2 345 935**
**US-A- 4 132 810**
**US-A- 4 239 785**

(73) Titulaire : **VAN SCHOUWENBURG, Gerrit A.**
**14, Chemin de Pierre-Longue**
**CH-1212 Grand-Lancy (CH)**

(72) Inventeur : **VAN SCHOUWENBURG, Gerrit A.**
**14, Chemin de Pierre-Longue**
**CH-1212 Grand-Lancy (CH)**

(74) Mandataire : **Robert, Jean S.**
**51, route du Prieur**
**CH-1257 Landecy (Genève) (CH)**

Jouve, 18, rue St-Denis, 75001 Paris, France

## Description

La présente invention a pour objet un procédé pour la réalisation d'un produit comestible à partir de bas morceaux de viande, présentant l'apparence et les qualités organoleptiques de la viande naturelle et ayant une teneur en humidité allant de 30 à 80 % et une teneur en graisse de 1 à 30 %, selon lequel on débarrasse lesdits bas morceaux de leurs éléments indésirables.

La palabilité de la viande est déterminée par la structure de ses faisceaux fibreux et par les tissus qui les relient. Les grandes fibres musculaires sont formées de petites fibres qui sont faites elles-mêmes de milliers de myofibrilles, en forme de fines aiguilles d'un diamètre de l'ordre d'un micron. Des feuilles minces de tissus de liaison sont entrelacées avec les fibres musculaires. Quant aux myofibrilles, elles sont constituées par des cellules à noyaux multiples allongées composées de deux protéines, l'actine et la myosine, qui produisent les contractions musculaires.

La structure myofibrillaire du muscle détermine sa masticabilité et sa dureté, de même que les tissus collagéniques de liaison tels que membranes, fibres et tendons, qui renforcent la résistance mécanique de la structure contractile de base du muscle.

Dans les procédés utilisés jusqu'à présent pour la réalisation de produits comestibles à l'aide de bas morceaux de produits carnés, on a tenté d'utiliser autant que possible la structure myofibrillaire existante ou, au contraire, de remodeler les fibres et de les arranger de telle manière qu'elles ressemblent à la texture du muscle.

C'est ainsi que, selon le procédé décrit dans le brevet français N° 1 296 367 on prépare un mélange de viandes dans lequel de la viande crue finement divisée est mélangée intimement avec de la graisse finement divisée et de l'eau, dans certaines proportions en poids ; on moule ce mélange, puis on le traite de façon à le stabiliser. Dans ce procédé, le salage n'est pas indispensable et, s'il a lieu, il n'a pour but que de donner le goût voulu au produit ou d'en diminuer les pertes d'eau.

Il convient en outre de relever que le produit obtenu par la mise en œuvre du présent procédé est comestible à l'état cru alors que de nombreux procédés de restructuration de la viande fournissent des produits qui sont destinés à être consommés à l'état cuit. C'est le cas, par exemple, du procédé décrit dans le brevet français N° 2 132 785.

Le présent procédé se distingue des procédés connus en ce sens qu'il ne cherche pas à préserver ou à recréer une structure.

Ce procédé est caractérisé par le fait qu'on fragmente la viande débarrassée de ses parties indésirables au point de l'amener à former une pâte lisse et homogène de grain inférieur à 2 mm, sale ladite pâte de manière à produire une solubilisation partielle des protéines qu'elle contient, en mélangeant intimement le sel à la pâte et en lui laissant le temps d'agir, puis confectionne des tranches d'épaisseur inférieure ou égale à 3 mm à l'aide de ladite pâte, et enfin stabilise lesdites tranches par un traitement thermique produisant une coagulation des protéines préalablement solubilisées de façon à réaliser un réseau de liaison entre les particules de la pâte, sans altération sensible de celles-ci.

On utilisera, pour la mise en œuvre de ce procédé, des bas morceaux de bœuf, veau, porc, mouton ou volaille, que l'on débarrassera le plus soigneusement possible de leurs éléments indésirables tels que tendons, nerfs ou autres. Dans la mesure du possible, et si nécessaire, on enlèvera également le gras du muscle mais, cette opération étant difficile à réaliser, il y aura avantage à choisir, au départ, de la viande non grasse. Ce nettoyage pourra s'effectuer à la machine, puisque la structure du matériau initial n'a pas à être préservée.

La viande ainsi nettoyée est fragmentée très finement. Il est en effet important de ne pas réaliser un simple hachis, mais une véritable pâte, lisse et homogène, dont la grosseur de grain soit de l'ordre de 0,3 à 2 mm.

On ajoute à cette pâte du sel, en faible quantité, par exemple de 0,5 à 3,5 % en poids « humide », pour solubiliser partiellement les protéines qu'elle contient. Ces protéines solubilisées enrobent les particules constituant la pâte. On peut ajouter également des nitrates, nitrites, ascorbates ou autres additifs. Le cas échéant, on rectifie le goût par un assaisonnement à l'aide d'épices. Il est à remarquer que, le matériau se présentant sous la forme d'une pâte, les additifs, en particulier les épices, s'y mélangent intégralement, ce qui ne serait pas possible avec de la viande en morceaux. La pâte peut être ensuite laissée à reposer en une opération de maturation qui contribue à lui conférer la couleur désirée et donne au sel le temps d'agir. Ce repos pourra avoir des durées très variables, allant de quelques minutes à quelques heures, selon la qualité des produits de départ et celle des produits que l'on désire obtenir.

Il est à noter que l'on peut procéder à un préséchage des morceaux de viande avant qu'il ne soit procédé à la réduction en pâte lisse et homogène et avant le salage. On peut aussi réduire le taux d'humidité en utilisant, au départ, de la viande séchée ou même lyophilisée, que l'on ajoute à la viande fraîche, avant, pendant ou après la préparation de la pâte.

On confectionne ensuite des tranches d'une épaisseur inférieure ou égale à 3 mm, à l'aide de ladite pâte, après le repos de maturation, soit en roulant celle-ci en feuilles dont l'épaisseur correspond à celle des tranches et en découpant ces feuilles à l'aide d'emporte-pièces, soit en utilisant des moules ayant la forme et la dimension des tranches à réaliser, soit encore en moulant la pâte en pains que l'on congèle afin de permettre ensuite de les trancher finement.

Les tranches ainsi réalisées sont stabilisées par un traitement à chaud produisant une coagulation des protéines préalablement solubilisées, ce qui réalise un réseau de liaison entre les particules ou fibres de la pâte, sans altération sensible de celles-ci. Ce traitement à chaud s'effectuera à une température située entre 55 et 150 °C pendant 2 à 120 secondes, par exemple, selon la façon dont il est appliqué, par contact, par radiation (infra-rouge) ou par circulation d'air. Un bon résultat a été obtenu avec un chauffage par contact à une température de 70 à 80 °C pendant 2 à 10 secondes. Il est à remarquer que, dans le cas du chauffage par contact, le matériau utilisé à cet effet a une influence sur l'apparence du produit fini.

Le traitement thermique pourra être poursuivi afin de réaliser une véritable cuisson permettant la vente de tranches de viande précuites.

Une fois les tranches réalisées, il y a avantage à imprimer sur celles-ci, à l'aide de matrices présentant une empreinte, un relief rappelant le relief que présentent les tranches de viande naturelle. Ce relief sera pratiqué avant le traitement thermique et fixé par celui-ci. Il pourra également être réalisé en même temps que le traitement thermique lorsque celui-ci est appliqué par contact. Grâce à ce relief, l'épaisseur des tranches n'est pas partout la même, ce qui, dans l'impression que donne la mastication, augmente la ressemblance avec les tranches de viande naturelle. D'ailleurs, selon sa profondeur, ce relief donnera aux tranches l'aspect de la viande naturelle ou modifiera leur « masticabilité ».

Il est à remarquer que le degré de la solubilisation des protéines réalisée détermine les propriétés physiques du produit terminé : à une faible solubilisation correspond un produit se déchirant aisément alors qu'une forte solubilisation conduit à un produit très élastique demandant plus de mastication.

Il est également à remarquer qu'il faut apporter une attention particulière à la couleur du produit fini, la couleur désirée pouvant être obtenue non seulement par un repos de maturation, mais en emballant le produit sous une atmosphère contrôlée contenant du monoxyde d'azote.

Les tranches ainsi réalisées seront vendues fraîches et l'acheteur les utilisera comme des tranches de viande découpées dans le muscle, que ce soit du rosbif, du bacon ou de la viande pour la fondue chinoise qui, alors, sera vendue de préférence à l'état congelé.

Les exemples qui suivent donnent des indications sur la façon dont le présent procédé peut être pratiquement mis en œuvre :

Exemple 1 : Viande pour fondue chinoise

Du jarret de veau est passé dans une machine qui le débarrasse de ses nerfs, tendons et tissus de liaison. Les matières éliminées représentent 16 à 20 % en poids du matériau initial. La viande est alors réduite en une pâte lisse et homogène en même temps qu'elle est additionnée de sel, à raison de 1,8 % en poids, de salpêtre (1,5 g/kg) et d'acide ascorbique (0,5 g/kg) assurant sa coloration. L'opération est poursuivie jusqu'à ce que le diamètre des particules soit inférieur à 1 mm, puis la pâte ainsi réalisée est pressée, sous vide, dans un boyau dont le diamètre est de 70 mm. Le produit est placé dans une presse pendant 3 jours à une température de 5 °C ce qui lui donne la forme désirée, généralement un ovale aplati. Le produit est ensuite laissé à reposer, pour maturation, encore 1 jour, toujours à une température de 5 °C, après quoi il est congelé à — 4 °C. Le boyau est éliminé et le produit est coupé en tranches d'environ 1 mm d'épaisseur. Ces tranches sont placées entre des rouleaux d'impression qui sont eux-mêmes chauffés à une température de 25 à 30 °C. Ces rouleaux impriment sur les tranches un relief ; les tranches sont ensuite passées, à l'aide d'une courroie de convoyage, sous des sources d'infra-rouge. La température en surface monte à 70 °C. Une exposition de 15 à 20 secondes, à cette température, sur chaque face, sera suffisante. Les tranches ainsi traitées à chaud sont ensuite congelées jusqu'à leur consommation.

Exemple 2 : Bacon fumé

Un mélange de déchets de porc à teneur en graisse de 15 % et de viande de porc maigre est traité de la même façon que dans l'exemple 1. De l'arôme-fumée et des agents colorants (salpêtre et acide ascorbique) sont ajoutés ainsi que 2,8 % de sel. Après réduction du produit en pâte lisse et homogène, celle-ci est dégazée, puis le produit est laissé reposer pour maturation pendant 1 jour à une température de 1 à 6 °C. La pâte est légèrement congelée (— 2 °C à — 4 °C) et est ensuite étendue en feuilles de 1,5 à 2 mm d'épaisseur. Des tranches sont découpées à l'emporte-pièce dans ces feuilles congelées et passées entre des courroies se déplaçant à une vitesse de 5 m/min., chauffées à 75 °C. Ces courroies présentent un motif en creux ou en relief qui s'imprime dans les tranches où il est fixé par le traitement thermique. Après 15 à 20 secondes les tranches ont franchi ces courroies. Elles sont alors refroidies et emballées.

Exemple 3 : Tranche de dinde

De la viande de dinde est réduite en une pâte homogène présentant une dimension moyenne de particules de 1 à 1,5 mm. 2 % de sel sont ajoutés de même que des agents aromatisants. Le sel est mélangé intimement à la pâte. Un laminoir est utilisé pour réduire le produit en feuille d'1 mm d'épaisseur entre deux courroies chauffées à une température de 70 à 75 °C. La feuille est refroidie après 60 à 90 secondes. Des tranches sont découpées à l'emporte-pièce de cette feuille et emballées. Les chutes sont à nouveau réduites en pâte et mélangées avec le matériau de départ. Les courroies présentent des motifs décoratifs en creux et en relief qui s'impriment sur les tranches.

Exemple 4 : Viande à fondue

Des rognures de viande de bœuf maigre sont dénervées mécaniquement afin d'en éliminer les tendons et les tissus conjonctifs. Du sel (1,5 % en poids), du salpêtre (1 g/kg) et de l'acide ascorbique (0,5 g/kg) sont ajoutés. Ce mélange est ensuite réduit au broyeur (cutter) jusqu'à ce qu'une pâte homogène soit obtenue, dont les particules ont une dimension se situant entre 0,5 et 2 mm. Une quantité de 8 g de cette pâte est déposée sur un cercle reposant sur une plaque chauffée à 60 à 70 °C, le tout formant moule. Ce moule a la forme désirée de la tranche. Un poinçon chauffé à 65 à 75 °C, qui s'adapte exactement dans le moule, écrase la pâte jusqu'à ce que tout le moule soit rempli. Le moule ayant une surface d'environ 60 cm$^2$, la tranche aura environ 1,2 mm d'épaisseur. Après 2 à 5 secondes, la tranche, stabilisée, est retirée. La plaque et le poinçon présentent un motif qui s'imprime dans la tranche. Le produit présente la couleur rouge vif de la viande fraîche.

Exemple 5 : Rosbif

Une tranche est réalisée de la même façon que dans l'exemple 4, mais la bague latérale du moule dans lequel elle est formée est chauffée à une température de 100 à 120 °C, alors que la plaque de base formant le fond du moule est, elle, chauffée à 60 à 70 °C. Cette tranche présente ainsi la couleur brun foncé de la viande cuite à sa périphérie, alors que sa partie centrale reste rouge vif. Le produit obtenu de cette façon ressemble à une tranche coupée à partir de muscle de bœuf qui a été rôti, demeurant saignant au centre.

Exemple 6 : Bœuf cuit

Une tranche est préparée de la même façon que dans l'exemple 4. Après stabilisation, cette tranche est posée sur une courroie convoyeuse et se déplace dans un four à infra-rouge chauffé à une température de 70 à 80 °C. La tranche est cuite en 40 à 80 secondes selon la température du four et le degré de cuisson désiré.

Exemple 7 : Bœuf fumé

Une tranche est préparée de la même façon que dans l'exemple 4. Cependant, du bœuf lyophilisé en poudre (5 à 10 %) est ajouté à la viande dénervée et est réduit en pâte en même temps que celle-ci. La teneur en eau passe de cette façon de 70 à 75 % pour les déchets de viande fraîche à 65 à 67,5 % pour le produit fini. Un arôme-fumée est ajouté à la pâte avant la réalisation des tranches.

Du fait que le produit est plus sec, la couleur des tranches est quelque peu plus foncée. Si cela est désiré, on peut obtenir une teinte rouge foncé en augmentant la température du poinçon et de la plaque de quelques degrés ou en augmentant légèrement le temps pendant lequel la tranche est chauffée entre le poinçon et la plaque.

Exemple 8 : Jambon cru

De l'épaule de porc est placée pendant 48 heures dans une cellule réfrigérée. Pendant ce temps, elle perd 5 à 7 % de son poids en humidité. La viande est dénervée mécaniquement et 10 à 15 % de porc séché congelé peu gras sont ajoutés, de même que 2,2 % de sel, du salpêtre à raison d'1,5 g/kg et de l'acide ascorbique (0,5 g/kg). Des arômes peuvent être ajoutés si cela est désiré. La viande est réduite dans une broyeuse (cutter) en particules de fibres de dimensions se situant entre 1 et 2 mm. La pâte est laissée reposer quelque temps pour que l'humidité s'égalise et pour qu'elle prenne la couleur désirée. Des tranches sont réalisées de la même manière que dans l'exemple 4. La couleur de ces tranches est rose pâle mais devient plus foncée si la tranche est stockée en l'absence d'oxygène.

**Revendications**

1. Procédé pour la réalisation d'un produit comestible à l'état cru à partir de bas morceaux de viande, présentant l'apparence et les qualités organoleptiques de la viande naturelle et ayant une teneur en humidité allant de 30 à 80 % et une teneur en graisse de 1 à 30 %, le reste étant formé de protéines, selon lequel on débarrasse lesdits bas morceaux de leurs éléments indésirables, caractérisé par le fait qu'on fragmente les parties restantes au point de les amener à former une pâte lisse et homogène de grain inférieur à 2 mm, sale ladite pâte de manière à produire une solubilisation partielle des protéines qu'elle contient, en mélangeant intimement le sel à la pâte et en lui laissant le temps d'agir, puis confectionne des tranches d'épaisseur inférieure ou égale à 3 mm à l'aide de ladite pâte, et enfin stabilise lesdites tranches par un traitement thermique produisant une coagulation des protéines préalablement solubilisées de façon à réaliser un réseau de liaison entre les particules de la pâte, sans altération sensible de celles-ci.

2. Procédé suivant la revendication 1, caractérisé par le fait qu'on laisse reposer ladite pâte, après salage, en une opération de maturation, qui lui confère la couleur désirée et laisse au sel le temps d'agir.

3. Procédé suivant la revendication 1, caractérisé par le fait que le salage s'effectue à raison d'au moins 0,5 % en poids.

4. Procédé suivant la revendication 1, caractérisé par le fait qu'on assaisonne ladite pâte à l'aide d'épices.

5. Procédé suivant la revendication 1, caractérisé par le fait qu'on réduit le taux d'humidité de la viande par un pré-séchage de celle-ci avant sa réduction en pâte fine et homogène et avant le salage.

6. Procédé suivant la revendication 1, caractérisé par le fait qu'on réduit le taux d'humidité de la viande en ajoutant de la viande séchée à la viande fraîche, avant, pendant ou après sa réduction en pâte fine et homogène, mais avant le salage.

7. Procédé suivant la revendication 1, caractérisé par le fait qu'on imprime à la surface desdites tranches un motif en creux ou en relief.

8. Procédé suivant la revendication 1, caractérisé par le fait qu'on soumet lesdites tranches à un traitement thermique produisant leur cuisson.

## Claims

1. Process for making a food product able to be consumed without cooking, from cheap meat lumps, having the appearance and the organoleptic qualities of the natural meat and having a moisture content situated between 30 to 80 % and a fat content situated from 1 to 30 %, the rest being constituted from proteins, according to which one removes from the said lumps their undesirable elements, characterized by the fact that one comminutes the remaining portions so as to bring them to form a smooth and homogeneous paste of a size lower than 2 mm, adds salt to the said paste so as to produce a partial solubilization of the proteins it contains, while mixing thoroughly the salt to the paste and giving it the time of acting, then realizes slices of a thickness lower or equal to 3 mm by means of the said paste, and then stabilizes the said slices by a heat treatment producing a coagulation of the proteins previously solubilized so as to realize a connective network between the particles of the paste, without substantial alteration of these particles.

2. Process as claimed in claim 1, characterized by the fact that one let the said paste to rest, after the salting operation, in a maturation operation, which gives it the desired colour and let to the salt the time of acting.

3. Process according to claim 1, characterized by the fact that the adding of salt is effected by reason of at least 0,5 % in weight.

4. Process according to claim 1, characterized by the fact that one flavours the said paste by means of spices.

5. Process according to claim 1, characterized by the fact that one reduces the moisture content of the meat by a pre-drying of this meat before its comminution into a smooth and homogeneous paste and before the salting operation.

6. Process according to claim 1, characterized by the fact that one reduces the moisture content of the meat while adding dried meat to the fresh meat, before, during or after its reduction into a smooth and homogeneous paste, but before the salting operation.

7. Process according to claim 1, characterized by the fact that one imprints on the surface of the said slices an intaglio or relief pattern.

8. Process according to claim 1, characterized by the fact that one submits the said slices to a heat treatment producing their cooking.

## Patentansprüche

1. Verfahren zur Herstellung eines Nahrungsmittels aus Fleischstücken geringer Qualität, wobei das Nahrungsmittel das Aussehen und die organoleptischen Qualitäten natürlichen Fleisches hat sowie einen Feuchtigkeitsgehalt zwischen 30 und 80 % und einen Fettgehalt von 1 bis 30 %, wobei der Rest aus Proteinen besteht, wonach man die Stücke geringer Qualität von ihren unerwünschten Elementen befreit, dadurch gekennzeichnet, daß man die verbliebenen Teile bis zu dem Punkt auflöst, bei dem man aus ihnen eine homogene und glatte Paste mit einer Korngröße unter 2 mm bilden kann, diese Paste salzt, um eine teilweise Auflösung der darin enthaltenen Proteine zu bewirken indem man das Salz und die Paste intensiv mischt und ihr Zeit zum Setzen läßt, anschließend Scheiben mit einer Dicke gleich oder kleiner 3 mm bildet und schließlich die Scheiben durch eine thermische Behandlung stabilisiert, wobei eine Koagulation der vorher gelösten Proteine so stattfindet, daß ein Verbindungsnetz zwischen den Partikeln der Paste gebildet wird, ohne daß diese wesentlich beeinflußt werden.

2. Verfahren nach Anspruch 1, dadurch gekennzeichnet, daß man die Paste nach dem Salzen in einem Reifungschritt, der ihr die gewünschte Farbe vermittelt und dem Salz eine Einwirkzeit gibt, rasten läßt.

3. Verfahren nach Anspruch 1, dadurch gekennzeichnet, daß beim Salzen je nach Maßgabe zumindest 0,5 Gew.-% Salz zugegeben werden.

4. Verfahren nach Anspruch 1, dadurch gekennzeichnet, daß die Paste mit Hilfe von Gewürzen abgeschmeckt wird.

5. Verfahren nach Anspruch 1, dadurch gekennzeichnet, daß der Feuchtigkeitsgehalt des Fleisches durch eine Vortrocknung vor seiner Zerkleinerung zur feinen und homogenen Paste und vor dem Salzen verringert wird.

6. Verfahren nach Anspruch 1, dadurch gekennzeichnet, daß die Verringerung des Feuchtigkeitsgehaltes des Fleisches durch Zugabe von Trockenfleisch zum Frischfleisch vor, während oder nach dessen Zerkleinerung zur feinen und homogenen Paste, aber vor dem Salzen durchgeführt wird.

7. Verfahren nach Anspruch 1, dadurch gekennzeichnet, daß der Oberfläche der Scheiben ein erhobenes oder vertieftes Muster aufgedrückt wird.

8. Verfahren nach Anspruch 1, dadurch gekennzeichnet, daß man die Scheiben einer thermischen Behandlung unterwirft, durch die sie gegart werden.